Europäisches Patentamt

European Patent Office

Office européen des brevets

(19)

(11) Publication number: **0 187 478 B1**

# EUROPEAN PATENT SPECIFICATION

(12)

(45) Date of publication of patent specification: **13.03.91** (51) Int. Cl.⁵: **H02K 1/27**

(21) Application number: **85308868.0**

(22) Date of filing: **05.12.85**

(54) Permanent magnet rotor e.g. for generators and method of construction.

(30) Priority: **06.12.84 US 678740**

(43) Date of publication of application:
**16.07.86 Bulletin 86/29**

(45) Publication of the grant of the patent:
**13.03.91 Bulletin 91/11**

(84) Designated Contracting States:
**CH DE FR GB LI**

(56) References cited:
**EP-A- 0 134 670**
**GB-A- 2 117 188**

**PATENT ABSTRACTS OF JAPAN, vol. 5, no.
125 (E-69)[797], 12th August 1981; & JP - A -
56 62054 (HITACHI SEISAKUSHO K.K.)
27-05-1981**

**PATENT ABSTRACTS OF JAPAN, vol. 7, no.
154. (E-185)[1299], 6th July 1983; & JP - A - 58
63059 (HIROSHI YAMADA) 14-04-1983**

(73) Proprietor: **ALLIED-SIGNAL INC. (a Delaware
corporation)**
**Columbia Road and Park Avenue P.O. Box
2245R**
**Morristown New Jersey 07960(US)**

(72) Inventor: **Denk, Joseph**
**428 8th Street**
**Manhattan Beach California(US)**

(74) Representative: **Rees, David Christopher et al**
**Kilburn & Strode 30 John Street**
**London WC1N 2DD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Generators for use in high output, high speed applications are devices with critical weight and volume restrictions. Such devices typically have permanent magnet rotors, which have a plurality of rare earth permanent magnet elements located on a shaft of magnetized material. The shaft has a number of flat machined faces about its periphery, onto which the rare earth permanent magnet elements are mounted.

Generally, spacers made of aluminium or some other non-magnetizable material are located around the periphery of the shaft in the area between the magnets, and rings of the same type of non-magnetizable material are located on both ends of the shaft axially adjacent the annulus of permanent magnets and spacers. An outer sleeve made of non-magnetizable material is shrink-fitted over the magnets, spacers, and rings to prevent the magnets from moving radially outward during high speed rotation of the rotor.

While such a construction can provide acceptable characteristics for most generator applications, it also presents several major problems in state-of-the art generators operating at extremely high speeds and providing very high outputs, resulting in reduced performance high reject rates, and relatively high unit costs.

One significant problem is that of heat build up in the rotor. The heat transfer characteristics of rotors using spacers and rings as described above are not uniform, and may thus lead to heat build up possibly resulting in damage to the rare earth permanent magnets. In addition, it is apparent that machining the spacers and rings to fit together properly with the magnets is fairly difficult and requires extremely close tolerances. If the rings and spacers in the rotors do not fit exactly, the rotor will not be stable at very high rotational speeds, thus allowing relative movement of the components within the outer sleeve and an unbalanced condition in the rotor which may result in dynamic failure of the device.

A more serious problem encountered in the construction of such a permanent magnet rotor is that the rotor assembly tends not to have good rigidity or good shaft stiffness, thus reducing the flexure critical speed of the device, which is the maximum speed of rotation without significant dynamic vibration occurring. Since the rotor must be designed to operate at a very high rate of rotation the lack of proper stiffness in rotor construction will result in a high rejection rate at best, and possibly in a product which will not perform within the required specifications. It may be appreciated that manufacture of a permanent magnet rotor with a shaft, magnets, spacers and rings, and the outer sleeve is a very expensive method of construction. The very precise tolerance requirements of the spacers and rings and the high unit rejection rate both add further to the high cost of construction to such rotors.

An alternative rotor construction resulting in a substantially improved rotor capable of higher output, higher speed operation is described in European patent Publication No.134670A in the name of the present Applicants, which lies within the terms of Article 54(3) EPC.

This construction involves making a rotor by casting a non-magnetic material, preferably aluminium, directly onto the steel shaft with pockets or apertures for the permanent magnets cast into the aluminium, thereby reducing the need for machining. Following a small amount of machining of the assembly containing the magnets, a non-magnetic outer sleeve is heat shrunk onto the shaft.

This construction results in a completed rotor assembly having substantially improved rigidity characteristics, with an accordingly increased flexure critical speed and reduced possibility of dynamic unbalance in the rotor leading to machine failure. Since rings and spacers are not used in this technique, the tolerance problems accompanying this use is minimised. Additionally, since a reduced amount of machining is necessary the rotor is more economical to manufacture.

While this manufacturing technique increases rotor rigidity, it is nevertheless desirable to have an even more rigid rotor to allow construction of a longer rotor assembly. Longer rotors are desirable since the length of the rotor is generally proportional to output capacity of the resulting machine; however, with longer rotors of similar diameter and characteristics, fluxure critical speeds tend to decrease. In order to obtain both maximum output and maximum operating speed (which aids in producing maximum output), it is apparent that it is necessary to increase the rigidity of the rotor still further over the aluminium casting/ moulding technique.

While increasing the rigidty of the rotor, it is necessary to retain the other advantages of the cast aluminium or injection moulded rotor. For example, the machining of parts should be kept to a minimum to reduce the overall cost per unit. The number of parts should also be kept to a minimum, thereby avoiding the main design problem of the spacer and ring construction, i.e. improper fit, while still minimising heat build up by ensuring a tight fit between the rotor and the magnets. Finally, the resulting electrical machine must provide both high output and high speed operation in a minimum size package and at an economically feasible cost while having a low unit rejection rate.

According to the present invention, there is provided a method of manufacturing a permanent magnet rotor, comprising the steps of:- bonding an outer cylinder of non-magnetizable material to an inner cylinder of magnetizable material; bonding a first end piece to one end of the two cylinders; bonding a second end piece to the other end of the two cylinders; machining a plurality of pockets through the outer cylinder to expose a surface constituted by the inner cylinder at the botton of the pockets; locating a plurality of permanent magnets in the pockets ; and locating an outer sleeve of non-magnetizable material over the permanent magnets and the portions of the outer cylinder adjacent thereto.

The outer diameter of the inner cylinder is preferably a close fit inside the inner diameter of the outer cylinder. Preferably, the outer radius of the inner cylinder is 0.001-0.0015 inches (0.025 to 0.038mm) less than the inner radius of the outer cylinder. Preferably the outer radius cylinder is bonded to the inner cylinder by a hot isostatic pressing bonding procedure. In a preferred embodiment, the outer cylinder is bonded to the inner cylinder by inserting the inner cylinder into the outer cylinder; sealing and evacuating the joint between the two cylinders; applying high pressure and heat to bond the inner cylinder to the outer cylinder in a non-fusion process.

The present invention may thus provide a rotor having exceptional rigidity characteristics due to its construction from cylindrical stock combined in unitary construction by nonfusion welding processes to hold the magnets. With the non-magnetic outer cylinder fitting snugly over a steel inner cylinder, and is welded in a nonfusion process to the inner cylinder in a hot isostatic pressing bonding procedure, the resulting joint between the inner cylinder and the outer cylinder may be as strong as the materials themselves.

Preferably, the sealing and evacuating step comprises: welding a first flat washer-shaped end plate onto one end of the inner and outer cylinders to seal the one end of the inner and outer cylinders; welding a second flat washer-shaped end plate onto the other end of the inner and outer cylinders to seal the other end of the inner and outer cylinders; providing a pinch tube extending through the second end plate to communicate with the joint; and evacuating the joint through the pinch tube then sealing off the pinch tube. Additionally the method may include machining the ends of the assembly comprising the two cylinders and end plates after bonding the two cylinders together, to obtain a flat configuration, thereby removing the first and second end plates, the pinch tube, and any welding material used in securing the first and second end plates to the inner and outer cylinders.

Preferably the two cylinders are joined in an autoclave with the necessary high pressure being applied by means of a high pressure gas. Preferably, the end pieces are bonded to the cylinders by inertia welding. The inertia welding produces a high quality and between the end pieces and the inner and outer cylinders.

The pockets for holding the permanent magnets are preferably machined into the outer cylinder by a milling operation, with the bottom of each pocket coming into contact with the surface of the steel inner cylinder. The pockets are preferably machined to provide a close fit for the permanent magnets when they are installed, thereby ensuring good heat transfer characteristics. The permanent magnets used are preferably rare earth permanent magnets, and are installed in the pockets preferably in contact with the steel inner cylinder.

Preferably, the machining step includes removing a portion of the inner cylinder to leave a flat surface at the bottom of each pocket. The outer surface of the rotor is then preferably machined to produce a uniformly cylindrical surface, as well as any desired configurations on the ends of the rotor, so that the non-magnetic outer sleeve can be installed on the rotor, preferably by heat-shrinking. Final balancing of the rotor may then occur.

Preferably the permanent magnets are of samarium cobalt or meodyminium-iron and the non-magnetizable material is preferably Inconel 718. The magnets may be held in position using a liquid adhesive.

In one preferred method, the sleeve is located by cooling the assembly, comprising the cylinders,permanent magnets and the end pieces; heating the sleeve and sliding the sleeve onto the assembly over the permanent magnets. Alternatively, the sleeve may be located by applying hydraulic pressure to the interior of the sleeve to expand the sleeve radially outwardly; and sliding the assembly comprising the cylinders into the permanent magnets and the end pieces into the sleeve.

The present invention also extends to a rotor made by a method as described above in accordance with the primary aspect of the invention.

Specifically, the invention extends to a permanent magnet rotor, comprising: an inner cylinder of magnetizable material; a hollow outer cylinder of non-magnetizable material surrounding and bonded to the inner cylinder, thereby forming an assembly; a plurality of permanent magnets mounted in pockets machined into and through the outer cylinder,the magnets being in contact with the inner cylinder; a first end piece of non-magnetizable material bonded to one end of she said assembly; a second end piece of non-magentizable material bonded to the other end of the assembly; and a sleeve of non-magnetizable material installed over the magnets and the portions of the outer cylinder therebetween.

A method according to the teachings of the present invention may present substantial advantages over other construction techniques. Since rings and spacers are no longer used, the tolerance problems and operational instability characteristics accompanying their use are no longer present. Substantial costs are saved by the reduced amount of machining required by the rotor (and the elimination of machining spacers and rings).

The advantages of the present invention over the aluminium injected rotor, while less apparant, are no less impressive.

A rotor constructed according to the principles of the present invention may possess superior rigidity characteristics, and therefore may substantially increase the critical speed the machine is capable of, while reducing the possibility of any dynamic inbalances in the rotor which could lead to machine failure. Since the rigidity characteristics may be substantially improved over even the aluminium injection moulded rotor discussed above, a longer rotor than previously thought possible may be constructed, which will of course result in a higher rated machine operating at the same speeds. Indeed, by using this technique rotors having substantially higher output and operating at higher speed may be constructed, thereby allowing greater performance from a smaller package than previously possible.

Depending on the design of the partiuclar machine, which as those skilled in the art will immediately recognize may vary considerably depending on application requirements, a machine using a rotor construted according to the present invention may provide as much as 100% more output for a given design, and typically at least 50% more output than a machine containing an aluminium injected rotor, which itself was and is far more efficient than rotors constructed using rings and spacers. Even though the rotor of the present invention provides such greatly improved operating characteristics, it will be apparent to those skilled in the art that it may be constructed fairly economically due to the greatly reduced machining required, compared to the ring and spacer type rotor, and the elimination of the aluminium injection moulding step in the aluminium injected rotor. Since the present invention also provides a rotor producing a higher output from a given volume and weight while retaining excellent strength and reliability characteristics, the present invention is believed to represent a significant step forward in improving the state of the art.

The invention may be carried into practice in various ways and some embodiments will now be described by way of example with reference to the accompanying drawings, in which:

Figure 1 is a section through the inner and outer cylinders immediately before the hot isostatic pressing operation is performed to bond them together;

Figure 2 is a sectional view similar to Figure 1 showing the end pieces frictionally welded onto the machined ends of the inner and outer cylinders;

Figure 3 is a perspective view of the rotor of Figure 2 showing pockets for receiving the permanent magnets;

Figure 4 is a perspective view illustrating the application of the outer cylinder onto the rotor assembly of Figure 3 following installation of the magnets and final machining; and

Figure 5 is a section through a device used to fit the outer shell by using pressure, in accordance with an alternative embodiment of the invention.

Like the aluminium injected rotor, the rotor of the present invention is designed to support permanent magnets laterally with a non-magnetic material while providing an inner core made of magnetizable material upon which the permanent magnets rest.

As shown in the drawings, an inner cylinder 10 made of magnetizable material such as steel, is inserted into a larger outer cylinder 20, which is made of a non-magnetic material such as that sold under the Trade mark "Inconel". The non-magnetic material used in the preferred embodiment is Inconel 718, a material which is both extremely strong and non-magnetic. The outer diameter of the inner cylinder 10 closely matches the inner diameter of the outer cylinder 20 in order to ensure a good fit. Generally speaking, clearance of 0.001 - 0.0015 inches (0.025 to 0.038mm) has been found to be acceptable. It is important, before placing the inner cylinder 10 into the outer cylinder 20, to ensure that the ajoining surfaces of the inner cylinder 10 and the outer cylinder 20 are completely free from films, oxides, and other contaminants.

A first plate 30 in the form of a flat washer is placed at one end of the sub-assembly consisting of the inner cylinder 10 and the outer cylinder 20 so that the first end plate 30 covers completely one end of the joint between the inner cylinder 10 and the outer cylinder 20. The first end plate 30 is then welded onto the inner cylinder 10 and the outer cylinder 20 to provide a seal at that end of the sub-assembly.

A second end plate 32 is also used, the second end plate 32 being identical to the first end plate 30, with the exception that an aperture 34 has been made in the surface of the second end plate 32 to allow a pinch tube 36 to be installed. The pinch tube 36 is securely fastened to the second end plate 32 by brazing or by some other means.

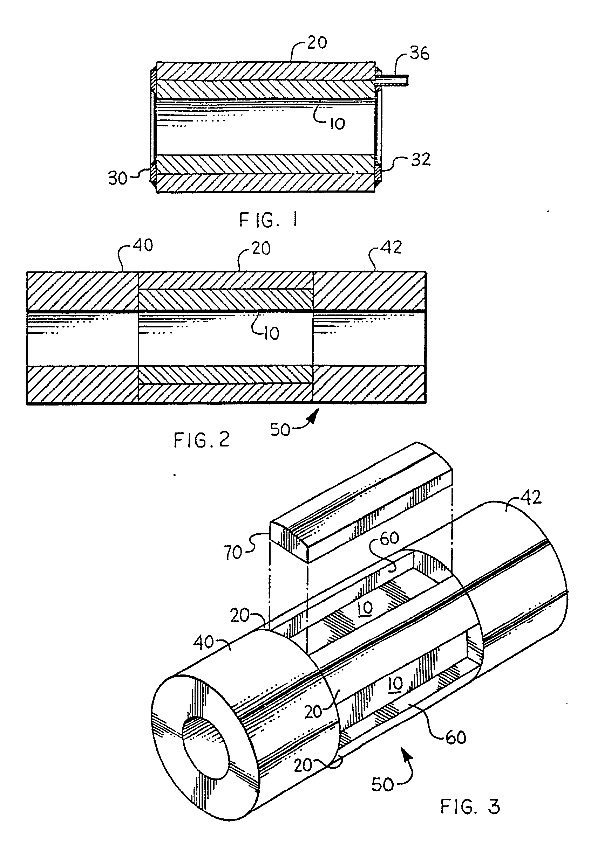

The second end plate 32 is then placed on the other end of the sub-assembly as shown in Figure 1, so as to cover the remaining joint area between the inner cylinder 10 and outer cylinder 20. The interior of the pinch tube 36 is located in the end plate 32 so as to communicate with the joint between the inner cylinder 10 and the outer cylinder 20. The second end plate 32 is then welded into place on the inner cylinder 10 and the outer cylinder 20, sealing the joint between the inner cylinder 10 and the outer cylinder 20 at that end.

It will be appreciated that the joint between the inner cylinder 10 and the outer cylinder 20 is now completely sealed except for access through the pinch tube 36. The pinch tube 36 is used for purposes of joint evacuation, and a vacuum is applied to the pinch tube 36 to remove completely any atmospheric contaminants from the joint between the inner cylinder 10 and the outer cylinder 20, and the pinch tube 36 is pinched off to preserve the vacuum. The inner cylinder and the outer cylinder 20 are thus ready to be welded in a non-fusion process. The preferred method for welding the inner cylinder 10 to the outer cylinder 20 is a hot isostatic pressing (HIP) bonding, during which operation high pressure is directed radially inwards on the outer cylinder 20 and radially outwards on the inner cylinder 10 while the inner cylinder 10 and the outer cylinder 20 are both heated to a high temperature. HIP bonding, a type of diffusion welding, is typically performed in an autoclave filled with high pressure argon gas. For example, an application of 15,000 psi (1.05 X $10^7$ kgf/m$^2$) pressure and 1800°F (982°C) has been used to perform the diffusion welding operation on the inner cylinder 10 and the outer cylinder 20 with HIP bonding.

Following the welding operation, the ends of the assembly comprising the inner cylinder 10 the outer cylinder 20 and the end plates 30,32 are machined flat, removing the end plates 30,32 as well as the weld joint used to fasten the end plates 30,32 to the inner cylinder 10 and the outer cylinder 20. Considerable care must be taken in the machining operation to ensure the fabrication of flat surfaces on the ends of the subassembly comprising the inner cylinder 10 and the outer cylinder 20.

Referring now to Figure 2, two cylindrical end pieces 40,42 also made of a non-magnetic material, preferably also Inconel 718, are provided which are preferably of the same outer diameter as the outer cylinder 20 and the same inner diameter as the inner cylinder 10. The ends of the end pieces 40,42 to be joined to the inner cylinder 10 and the outer cylinder 20 are also machined flat to ensure the creation of good joints.

The welding operation to join the end pieces 40,42 to the assembly comprising the inner cylinder 10 and the outer cylinder 20 is another non-fusion welding process known as friction welding or inertia welding. In inertia welding, the heat required for the welding operation is obtained as a result of frictional heating caused by rotation the joint components against each other using predetermined amounts of kinetic energy and pressure, making friction welding a highly repeatable operation. The end piece 40 is thus friction welded to one end of the sub-assembly comprising the inner cylinder 10 and the outer cylinder 20, and the end piece 42 is inertia welded to the other end of the sub-assembly.

The next step of construction, which is illustrated in Figure 3, is the machining of pockets 60 into the rotor assembly 50, typically by milling. The pockets 60 are machined through the entire thickness of the outer cylinder 20, so that the inner cylinder 10, which is made of magnetizable material, appears at the bottom of each pocket 60. The pockets 60 are macnined through the entire length of the outer cylinder 20, so that permanent magnets 70, when installed in the pockets 60, will be in contact with the magnetizable material of the inner cylinder 10 throughout the length of the inner cylinder 10.

Depending on the type of machine being constructed, the number of poles, and hence magnets 70, to be placed on the rotor assembly 50 will vary. In the embodiments shown in Figure 3, a four pole machine is illustrated. The magnets 70, which are typically rare earth permanent magnets such as samarium cobalt or neodymium-iron, may be installed in the pockets 60 without adhesives if desired, although in the preferred embodiment a high temperature liquid adhesive such as that sold under the Trade Mark "Loctite" is used. It is apparent at this point that by careful machining of the pockets 60 the magnets 70 will fit tightly therein, thereby insuring excellent heat transfer characteristics.

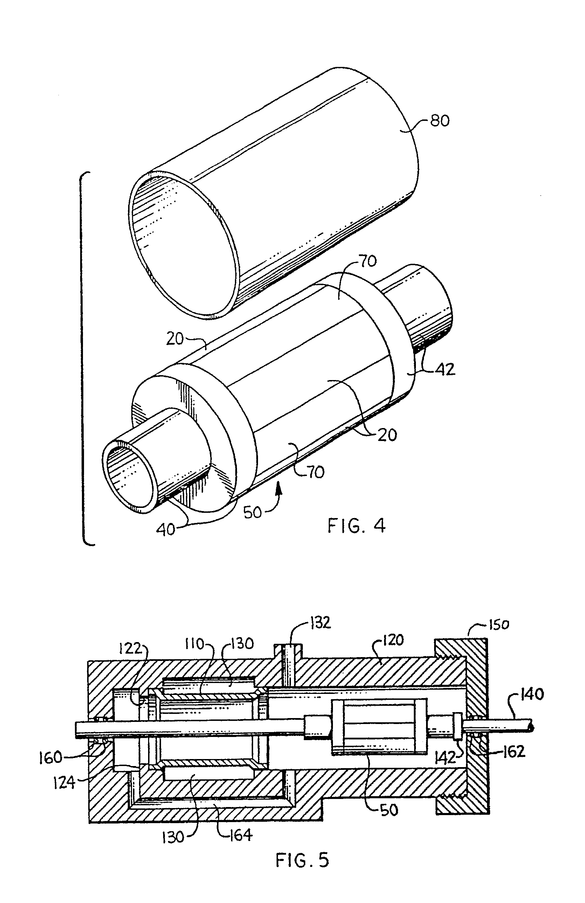

Following the installation of the magnets 70 onto the rotor assembly 50, a final machining operation takes place in which the surface of the rotor assembly 50 is machined to the desired final dimensions, resulting in an appearance similar to the rotor assembly 50 as shown in Figure 4. At this point it should be noted that the permanent magnets 70, when installed in the pockets 60, (Figure 3) are generally fixed so that they will extend slightly from the surface of the rotor assembly 50. In the machining operation mentioned above, the surface of the permanent magnets 70 as well as the surfaces of the outer cylinder 20 and the end pieces 40,42 are machined. By machining the surface of the permanent magnets 70, it is ensured that the entire rotor surface will be as smooth as possible prior to installation of an outer sleeve, which is described below.

The final assembly step, shown in Figure 4, is to install an outer shell 80 onto the rotor assembly 50. The outer shell is also made of a non-magnetic material, preferably Inconel 718. The thickness of the outer shell 80 is kept to a minimum to keep the distance between the magnets 70 and the stator (not shown) of the device as small as possible. Typically, the thickness of the shell 80 may vary from 0.04 inches to 0.28 inches (1.0 to 7.1mm). Factors in determining the required shell thickness include the diameter of the rotor assembly 50, the speed at which the device will operate, and the related centrifugal force operating on the rotor assembly 50.

The fit of the shell 80 on the rotor assembly 50 is a high-interference fit. The preferred method for installation of the shell 80 is to put the rotor assembly in dry ice, to heat the shell 80, and immediately to place the shell 80 in position on the rotor assembly 50. The shell 80 is then immediately cooled by directing water onto the shell 80 and the rotor assembly 50, to prevent any possible heat damage to the magnets 70. The rotor assembly 50 and the shell 80 may then be balanced by drilling holes in the larger diameter portion of the rotor. In certain applications, it may also be desirable to weld the outer shell 80 onto the rotor assembly 50 prior to the blancing operation, although it has been found that the high-interference fit of the shell 80 on the rotor assembly 50 without welding is generally acceptable.

In an alternative embodiment, pressure is used to expand the outer shell 110 slightly to allow the rotor assembly 50 to be inserted into the outer shell 110, as illustrated in Figure 5. In this embodiment, a housing 120, open at one end is designed to receive the shell 110, which has a diameter at its ends which is slightly larger than the diameter of the portion in between the ends. The shell 110 is positioned in the housing 120 with its inward movement limited by tabs 122, 124 which are integral with the housing 120. The portions of the housing 120 around the outside of the intermediate portion of the shell 110 contain an annular recessed area 130 in which hydraulic pressure will not be present, and which may therefore be vented. It is thus apparent that when the interior of the housing 120 is supplied with pressurized hydraulic fluid through an inlet 132, the shell 110 will be caused to expand outwardly, slightly increasing its inner diameter.

The rotor assembly 50 is placed on an hydraulic ram 140 which extends through the housing 120 and has an integral plate 142 to force the rotor assembly 50 into the shell 110. The housing 120 is sealed at its open end by a cover 150 which may be screwed onto the housing 120, and through which the hydraulic ram 140 extends. The hydraulic ram 140 is sealed by packing 160, 162 in the housing 120 and in the cover 150.

Hydraulic pressure is supplied to the housing 120, causing the shell 110 to expand radially outwardly. The hydraulic ram 140 then forces the rotor assembly 50 into the shell 110, with accurate location being ensured by contact of the rotor assembly 50 with the closed end of the housing 120. During this operation, the supply of hydraulic pressure to the interior of the shell 110 is provided by a hydraulic passage 164 in the housing 120 to equalise pressure on both sides of the shell 110.

By using this method, it is not necessary to heat the shell 110. Accordingly, the danger of damaging the magnets 70 by heating them when the shell 110 is installed on the rotor 50 may be completely eliminated.

## Claims

1. A method of manufacturing a permanent magnet rotor, comprising the steps of:- bonding an outer cylinder (20) of non-magnetizable material to an inner cylinder (10) of magnetizable material; bonding a first end piece (40) to one end of the two cylinders (10,20); bonding a second end piece (42) to the other end of the two cylinders (10,20); machining a plurality of pockets (60) through the outer cylinder (20) to expose a surface constituted by the inner cylinder (10) at the bottom of the pockets (60); locating a plurality of permanent magnets (70) in the pockets (60); and locating an outer sleeve (80) of non-magentizable material over the permanent magnets and the portions of the outer cylinder (20) adjacent thereto.

2. A method as claimed in Claim 1, characterised in that the outer cylinder (20) is bonded to the inner cylinder (10) by a hot isostatic pressing bonding procedure.

3. A method as claimed in Claim 1, characterised in that the outer cylinder (20) is bonded to the inner cylinder (10) by inserting the inner cylinder (10) into the outer cylinder (20);sealing and evacuating the joint between the two cylinders; and applying high pressure and heat to bond the inner cylinder (10) to the outer cylinder (20) in a non-fusion process.

4. A method as claimed in Claim 3 characterised in that the sealing and evacuating step comprises: welding a first flat washer-shaped end plate (30) onto one end of the inner and outer cylinders (10,20) to seal the one end of the inner and outer cylinders (10,20); welding a second flat washer-shaped end plate (32) onto the other end of the inner and outer cylinders (10,20) to seal the other end of the inner and outer cylinders (10,20); providing a pinch tube (36) extending through the second end plate (32) to communicate with the joint; and evacuating the joint through the pinch tube (36) then sealing off the pinch tube.

5. A method as claimed in Claim 5 characterised by additionally machining the ends of the assembly comprising the two cylinders (10,20) and end plates (30,32) after bonding the two cylinders together, to obtain a flat configuration, thereby removing the first and second end plates (30, 32) the pinch tube, and any welding material used in securing the first and second end plates to the inner and outer cylinders.

6. A method as claimed in any preceding claim characterised in that the end pieces (40,42) are bonded to the cylinders (10,20) by inertia welding.

7. A method as claimed in any preceding claim characterised in that the machining step includes removing a portion of the inner cylinder (10) to leave a flat surface at the bottom of each pocket (60).

8. A method as claimed in any preceding claim characterised by machining the surface of the rotor after the permanent magents (70) have been located and before the sleeve (80) has been located, to provide a smooth surface for installation of the sleeve (80).

9. A method as claimed in any preceding claim characterised in that the sleeve (80) is located by cooling the assembly, comprising the cylinders (10,20) the permanent magnets (70) and the end pieces (40,42); heating the sleeve (80) and sliding the sleeve (80) onto the assembly over the permanent magnets (70).

10. A method as claimed in any of claims 1 to 8 characterised in that the sleeve (80) is located by applying hydraulic pressure to the interior of the Sleeve (80) to expand the sleeve radially outwardly; and sliding the assembly comprising the cylinders (10,20), the permanent magnets (70), and the end pieces (40,42) into the sleeve.

**Revendications**

1. Procédé de fabrication d'un rotor à aimants permanents, comprenant les opérations de :

liaison d'un cylindre extérieur (20) en matière non magnétisable à un cylindre intérieur (10) en matière magnétisable ; liaison d'une première pièce d'extrémité (40) à une extrémité des deux cylindres (10,20) ; liaison d'une deuxième pièce d'extrémité (42) à l'autre extrémité des deux cylindres (10,20) ; usinage d'une pluralité de poches (60) à travers le cylindre extérieur (20) de manière à découvrir une surface constituée par le cylindre intérieur (10) au fond des poches (60) ; mise en place d'une pluralité d'aimants permanents (70) dans les poches (60) ; et mise en place d'un manchon extérieur (80) en matière non magnétisable sur les aimants permanents et les parties du cylindre extérieur (20) adjacentes à ces derniers.

2. Procédé suivant la revendication 1, caractérisé en ce que le cylindre extérieur (20) est lié au cylindre intérieur (l0) au moyen d'une technique de liaison par pression isostatique à chaud.

3. Procédé suivant la revendication 1, caractérisé en ce que le cylindre extérieur (20) est lié au cylindre intérieur (10) par insertion du cylindre intérieur (10) dans le cylindre extérieur (20) ; scellement et mise sous vide du joint entre les deux cylindres ; et application d'une pression et d'une chaleur élevées pour lier le cylindre intérieur (10) au cylindre extérieur (20) par un processus sans fusion.

4. Procédé suivant la revendication 3, caractérisé en ce que l'opération de scellement et de mise sous vide comprend : le soudage d'une première plaque d'extrémité (30) en forme de rondelle plane sur une extrémité des cylindres intérieur et extérieur (10,20) de manière à fermer cette extrémité des cylindres intérieur et extérieur (10,20) ; le soudage d'une deuxième plaque d'extrémité (32) en forme de rondelle plane sur l'autre extrémité des cylindres intérieur et extérieur (10,20) de manière à fermer l'autre extrémité des cylindres intérieur et extérieur t 10,20) ; l'installation d'un tube de pincement (36) traversant la deuxième plaque d'extrémité (32) de manière à communiquer avec le joint ; et la mise sous vide du joint par l'intermédiaire du tube de pincement (36), puis l'obturation du tube de pincement.

5. Procédé suivant la revendication 5, caractérisé par l'usinage additionnel des extrémités de l'assemblage comprenant les deux cylindres (10,20) et les plaques d'extrémité (30,32), après liaison des deux cylindres l'un à l'autre, afin d'obtenir une configuration plane, éliminant ainsi les première et deuxième plaques d'extrémité (30,32), le tube de pincement et toute matière de soudage utilisée pour la fixation des première et deuxième plaques d'extrémité aux cylindres intérieur et extérieur.

6. Procédé suivant l'une quelconque des revendications précédentes, caractérisé en ce que les pièces d'extrémité (40,42) sont liées aux cylindres (10,20) par soudage par inertie.

7. Procédé suivant l'une quelconque des revendications précédentes, caractérisé en ce que l'opération d'usinage comprend l'élimination d'une partie du cylindre intérieur (10) de manière à laisser une surface plane au fond de chaque poche (60).

8. Procédé suivant l'une quelconque des revendications précédentes, caractérisé par l'usinage de la surface du rotor après mise en place des aimants permanents (70) et avant mise en place du manchon (80), de manière à obtenir une surface lisse pour l'installation du manchon (80).

9. Procédé suivant l'une quelconque des revendications précédentes, caractérisé en ce que le manchon (80) est mis en place par refroidissement de l'ensemble comprenant les cylindres (10,20), les aimants permanents (70) et les pièces d'extrémité (40,42) ; chauffage du manchon (80) ; et emmanchement glissant du manchon (80) sur l'ensemble, au-dessus des aimants permanents (70).

10. Procédé suivant l'une quelconque des revendications 1 à 8, caractérisé en ce que le manchon (80) est mis en place par application d'une pression hydraulique à l'intérieur du manchon (80) de manière à dilater le manchon radialement vers l'extérieur ; et emmanchement glissant de l'ensemble, comprenant les cylindres (10,20), les aimants permanents (70) et les pièces d'extrémité (40,42), dans le manchon.

**Ansprüche**

1. Verfahren zur Herstellung eines Dauermagnet-Läufers, **dadurch gekennzeichnet,** daß ein äußerer Zylinder (20) aus nichtmagnetisierbarem Material mit einem inneren Zylinder (10) aus magnetisierbarem Material verbunden wird, daß ein erstes Endstück (40) mit einem Ende der beiden Zylinder (10, 20) verbunden wird, daß ein zweites Endstück (42) mit dem anderen Ende der beiden Zylinder (10, 20) verbunden wird, daß eine Vielzahl von Taschen (16) durch den äußeren Zylinder (20) eingearbeitet werden, um eine Oberfläche freizulegen, die durch den inneren Zylinder (10) am Boden der Taschen (60) ausgebildet ist, daß eine Vielzahl von Permanentmagneten (70) in den Taschen (60) angeordnet werden, und daß eine äußere Hülse (80) aus nichtmagnetisierbarem Material über den Permanentmagneten und den Teilen des damit benachbarten äußeren Zylinders (20) angeordnet werden.

2. Verfahren nach Anspruch 1, dadurch gekennzeichnet, daß der äußere Zylinder mit dem inneren Zylinder (10) durch ein Heißklebeverfahren bei isostatischem Druck verbunden wird.

3. Verfahren nach Anspruch 1, dadurch gekennzeichnet, daß der äußere Zylinder (20) mit dem inneren Zylinder (10) durch Einsetzen des inneren Zylinders (10) in den äußeren Zylinder (20) verbunden wird, daß die Verbindung zwischen den beiden Zylindern abgedichtet und evakuiert wird, und daß hoher Druck und Wärme aufgebracht werden, um den inneren Zylinder (10) mit dem äußeren Zylinder (20) in einem fusionsfreien Vorgang zu verbinden.

4. Verfahren nach Anspruch 3, dadurch gekennzeichnet, daß der Abdicht- und Evakuierschritt umfaßt: das Verschweißen einer ersten, flachen, beilagenförmigen Endplatte (30) mit einem Ende der inneren und äußeren Zylinder (10, 20), um das eine Ende der inneren und äußeren Zylinder (10, 20) abzudichten, das Verschweißen einer zweiten, flachen, beilagenförmigen Endplatte (32) mit dem anderen Ende der inneren und äußeren Zylinder (10, 20), um das andere Ende der inneren und äußeren Zylinder (10, 20) abzudichten, das Ausbilden eines Quetschrohres (36), das sich durch die zweite Endplatte (32) erstreckt, um den Anschluß zu der Verbindung herzustellen, und das Evakuieren der Verbindung über das Quetschrohr (36) mit anschließendem Abdichten des Quetschrohres.

5. Verfahren nach Anspruch 4, gekennzeichnet durch ein zusätzliches Bearbeiten der Enden der Anordnung bestehend aus den beiden Zylindern (10, 20) und Endplatten (30, 32) nach dem Verbinden der beiden Zylinder miteinander, um eine flache Konfiguration zu erhalten, wodurch die ersten und zweiten Endplatten (30, 32), das Quetschrohr und evtl. vorhandenes Schweißmaterial, das zur Befestigung der ersten und zweiten Endplatten mit den inneren und äußeren Zylindern verwendet wird, entfernt wird.

6. Verfahren nach einem der vorausgehenden Ansprüche, dadurch gekennzeichnet, daß die Endstücke (40, 42) mit den Zylindern (10, 20) durch Trägheitsschweißen verbunden werden.

7. Verfahren nach einem der vorausgehenden Ansprüche, dadurch gekennzeichnet, daß der Bearbeitungsschritt das Entfernen eines Teiles des inneren Zylinders (10) einschließt, damit eine ebene Fläche am Boden einer jeden Tasche (60) verbleibt.

8. Verfahren nach einem der vorausgehenden Ansprüche, gekennzeichnet durch die Bearbeitung der Oberfläche des Rotors, nachdem die Permanentmagneten (70) positioniert worden sind, und bevor die Hülse (80) aufgebracht worden ist, um eine glatte Oberfläche für den Einbau der Hülse (80) zu erhalten.

9. Verfahren nach einem der vorausgehenden Ansprüche, dadurch gekennzeichnet, daß die Hülse (80) in der Weise aufgebracht wird, daß die Anordnung bestehend aus den Zylindern (10, 20), den Permanentmagneten (70) und den Endstücken (40, 42) abgekühlt, die Hülse (80) aufgeheizt und die Hülse (80) auf die Anordnung über die Permanentmagneten (70) aufgeschoben wird.

10. Verfahren nach einem der Ansprüche 1 - 8, dadurch gekennzeichnet, daß die Hülse (80) in der Weise aufgebracht wird, daß ein hydraulischer Druck auf das Innere der Hülse (80) aufgegeben wird, damit die Hülse in radialer Richtung nach außen gedehnt wird, und daß die Anordnung bestehend aus den Zylindern (10, 20), den Permanentmagneten (70) und den Endstücken (40, 42) in die Hülse eingeschoben wird.

FIG. 1

FIG. 2

FIG. 3

FIG. 4

FIG. 5